# EUROPÄISCHE PATENTSCHRIFT

(11) **EP 1 043 506 B1**
(45) Veröffentlichungstag und Bekanntmachung des Hinweises auf die Patenterteilung: **26.11.2003**
(21) Anmeldenummer: 00106522.6
(22) Anmeldetag: 25.03.2000
(51) Int. Cl.: F15B 15/12, F16J 15/16

(54) **Schwenkmotor**
Rotary actuator
Vérin rotatif

(30) Priorität: 10.04.1999 DE 19916207
(43) Veröffentlichungstag der Anmeldung: 11.10.2000
(73) Patentinhaber: DaimlerChrysler AG, 70567 Stuttgart (DE)
(72) Erfinder: Acker, Bernd, 73733 Esslingen (DE); Busch, Werner, 71384 Weinstadt (DE)

(56) Entgegenhaltungen:
- DE-A- 3 420 150
- DE-A- 19 742 881
- DE-C- 4 337 815
- US-A- 3 030 934
- US-A- 4 475 738

## Beschreibung

Die Erfindung betrifft einen Schwenkmotor gemäß dem Oberbegriff des Anspruches 1.

Schwenkmotoren der vorgenannten Art sind aus der DE 43 37 815 C1 bekannt und im Scheitelbereich ihrer gehäuseseitigen und wellenseitigen, in Umfangsrichtung aufeinander folgende Arbeitskammern abgrenzenden Flügel mit Nuten versehen, in denen Dichtelemente liegen, die als rahmenförmige Dichtelemente eine geschlossene Dichtgrenze zwischen den jeweiligen Arbeitskammern bilden, in dem sie zwischen Nutgrund und jeweils gegenüberliegender gehäuse- bzw. wellenseitiger Umfangsbegrenzung und den hierzu winklig stehenden, einander gegenüberliegenden stirnseitigen Begrenzungen abdichten.

Die Dichtelemente umfassen bei der bekannten Lösung jeweils einen Dichtrahmen, der einen inneren Dichteinsatz umschließt, wobei dieser Dichteinsatz aus einem zentralen Innenkörper und einem zwischen zentralem Innenkörper und Rahmen liegenden E-lastomerring besteht, über den der Rahmen in Richtung auf die zugeordneten Dichtgrenzen belastet ist und über den das Dichtelement auch quer zur Rahmenebene zu einer druckdichten, scheibenförmigen Einheit verbunden ist. Zusammen mit dieser Einheit, und diese in Querrichtung abstützend ist in der Nut jeweils ein scheibenförmiger Füllkörper angeordnet, der eine Querstabilisierung des mehrteiligen Dichtelementes bewirkt und eine Anpassung an die jeweilige Nutbreite ermöglicht.

Aus der jeweils mit Druckmedium beaufschlagten Arbeitskammer tritt entlang den Flächen von Gehäuse und Welle, mit denen das Dichtelement zusammenwirkt, Druckflüssigkeit in die jeweilige Nut über und beaufschlagt hier das Dichtelement, wobei über das Druckmedium auch der auf den Dichtrahmen wirkenden Anpressdruck verstärkt wird.

Der geschilderte Aufbau des Dichtelementes mit zugeordnetem Füllstück bildet eine verhältnismäßig komplizierte und montagemäßig nicht leicht zu handhabende Einheit.

Ferner ist aus der DE 197 42 881 A1 ein Schwenkmotor bekannt, dessen Arbeitsräume gegeneinander über Flügel abgetrennt sind, die mit über ihre Länge durchlaufenden, radialen Nuten versehen sind und in die Rahmendichtelemente eingepresst sind. Diese Dichtelemente bestehen jeweils aus einem plattenförmigen Einsatzkörper, der beidseitig, also den Wänden der jeweiligen Nut zugewandt über den Umfang mit Dichtringen versehen ist, über die in radialer und axialer Richtung die angestrebte Abdichtung erfolgt.

Der Erfindung liegt die Aufgabe zugrunde, eine effiziente Abdichtung mit einem einfach aufgebauten Dichtelement zu ermöglichen.

Erfindungsgemäß findet hierzu ein Dichtelement Verwendung, bei dem die Nutbreite vom Dichtrahmen belegt ist, der hierzu umlaufend einen nach innen offenen U-förmigen Schenkelquerschnitt aufweist, so daß über sich im Rahmeninnenraum aufbauenden Fluiddruck sowohl eine Belastung des Rahmens in Richtung auf die Nutwände wie auch in Richtung auf die umlaufenden Dichtgrenzen erreicht wird. Dieser Druckaufbau wird erfindungsgemäß dadurch ermöglicht, daß die Verbindung zu den jeweils druckbeaufschlagten Arbeitskammern auf den Rahmeninnenraum ausmündet, was sich in einfachster Weise jeweils durch zumindest eine den jeweiligen Flügel quer durchsetzende Bohrung erreichen läßt. Eine Kurzschlußverbindung wird dabei im Rahmen der Erfindung dadurch vermieden, daß der innere Dichteinsatz als Sperrblende ausgebildet ist, die randseitig in die umlaufende Rinne des Dichtrahmens eingreift, so daß auf der einen oder anderen Seite sich aufbauender Druck zu einer entsprechenden Querbelastung führt, über die die Blende gegen eine der Rinnenwände angedrückt wird.

Bei dieser erfindungsgemäßen Ausgestaltung des Dichtelementes besteht dieses aus lediglich zwei Teilen, die sich in vorteilhafter Weise durch Einknüpfen des inneren Dichteinsatzes in den Rahmen verbinden lassen und die sich leicht montieren lassen. Toleranzprobleme sind bei der erfindungsgemäßen Lösung weitgehend vermieden, wobei es sich insbesondere im Hinblick auf den Einsatz des erfindungsgemäßen Dichtelementes in einem Schwenkmotor mit relativ kurzen Schwenkwegen als besonders zweckmäßig erweist, wenn der Dichtrahmen aus einem Elastomer, beispielsweise einem gummiartigen Material besteht, das auch in Umfangsrichtung, also bezüglich des Abstandes der Schenkel des Rahmens zueinander eine relativ hohe Flexibilität hat, so daß eine hohe Anpassungsfähigkeit mit der Fähigkeit eines guten Toleranzausgleiches gegeben ist. Über den inneren Dichteinsatz kann dabei auch eine gewisse Vorspannung auf den Dichtrahmen aufgebracht werden, und zwar sowohl in der Dichtungsebene wie auch quer hierzu.

Um auch bei der Verwendung von elastomerem Material eine hohe Standfestigkeit zu erreichen, und zwar bei kleinen Reibwerten, erweist es sich als zweckmäßig, dieses Material außenseitig zu beschichten, so beispielsweise mit aufgetragenem, aufgesprühtem oder in die Elastomermischung eingebrachten Anteilen an PTFE.

Um bei hohen Druckbelastungen zu hohe Drücke auf die vom inneren Dichteinsatz beaufschlagten, die Rinne begrenzenden Rahmenwände - im folgenden kurz: Rinnenwände -, zu vermeiden, erweist es sich als zweckmäßig, den Dichteinsatz im Bereich innerhalb des Rahmens zumindest partiell zu verdicken, und zwar derart, daß die Verdickung eine Wegbegrenzung durch Abstützung gegen die jeweilige Nutwand bildet.

Die erfindungsgemäße Lösung bietet auch die Möglichkeit, relativ große Querschnittsflächen der Nutwände als Verbindungswege zur jeweils mit Druckmedium, insbesondere mit Druckfluid beaufschlagten Arbeitskammer auszusparen, so daß in Verbindung mit der erfindungsgemäßen Ausgestaltung des Dichtelementes der Schwenkmotor auch gewichtsmäßig erleichtert werden kann.

Weitere Einzelheiten und Merkmale der Erfindung ergeben sich aus den Unteransprüchen. Ferner wird die Erfindung mit weiteren Einzelheiten und Merkmalen anhand der Zeichnungen näher erläutert. Es zeigen:
- Figur 1: eine erste Ausführungsform eines in einem Flügel eines Schwenkmotores angeordneten Dichtelementes gemäß der Erfindung, in einer schematisierten Schnittdarstellung,
- Figur 2: in einer der Figur 2 entsprechenden Darstellung eine zweite erfindungsgemäße Ausführungsform eines Dichtelementes,
- Figur 3: den Rahmen eines Dichtelementes gemäß Figuren 1 oder 2, schematisiert und in Draufsicht auf die Rahmenebene,
- Figuren 4+5: schematisierte Schnittdarstellungen des Rahmens gemäß Figur 3 in einer Schnittführung gemäß Linie IV, V - IV, V,
- Figur 6: in einer der Figur 3 entsprechenden Ansicht den Dichteinsatz eines Dichtelementes gemäß der Erfindung,
- Figuren 7+8: zwei verschiedene Ausgestaltungen des Dichteinsatzes gemäß Figur 6 in einer stirnseitigen Ansicht, und
- Figuren 9+10 den: beiden Ansichten gemäß Figur 7 und Figur 8 entsprechende Schnittdarstellungen der beiden verschiedenen Ausführungsformen des inneren Dichteinsatzes, jeweils in einer Schnittführung gemäß Linie IX, X - IX, X.

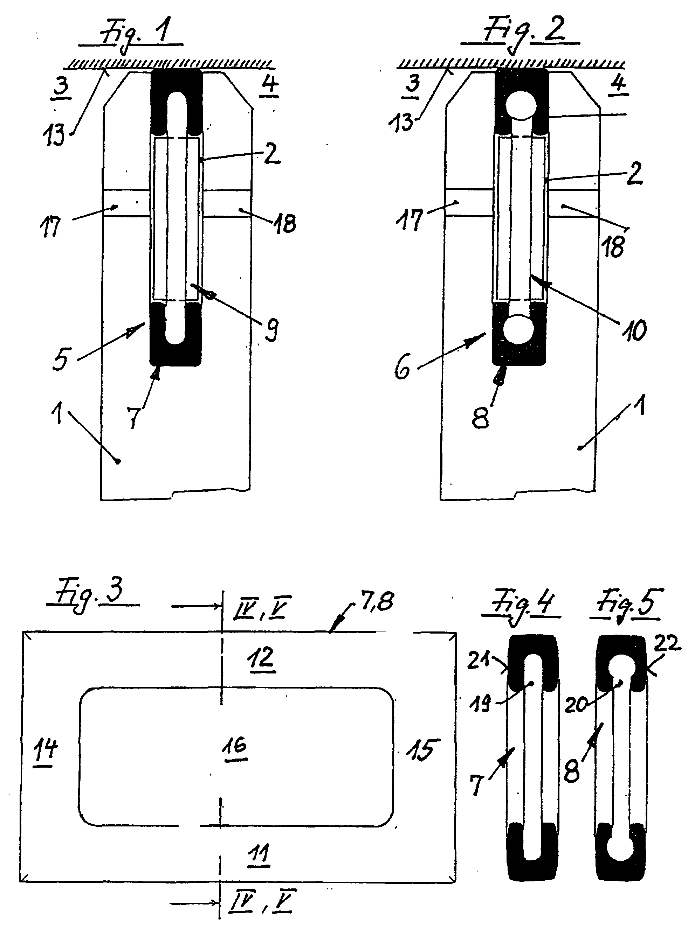

Für die Darstellungen ist Ausgangspunkt ein Schwenkmotor, wie er beispielsweise Figur 1 der DE 43 37 815 C1 im Prinzip zu entnehmen ist. Bei diesem Schwenkmotor schließen ein stirnseitig, beispielsweise über Deckel geschlossenes Gehäuse und eine in dem Gehäuse geführte Welle einen ringförmigen Arbeitsraum ein, in dem gehäuseseitige und wellenseitige, in Umfangsrichtung gegeneinander versetzte und radial einander übergreifende Flügel angeordnet sind, in deren Scheitelbereich jeweils über die Länge der Flügel durchlaufende Nuten vorgesehen sind. In den Nuten sind Dichtelemente angeordnet. Die Flügel mit den darin angeordneten Dichtelementen grenzen Arbeitskammern gegeneinander ab, die wechselweise mit Druckmedium beaufschlagbar sind, so daß Gehäuse und Welle gegeneinander verschwenkbar sind. Ein Einsatzgebiet für derartige Schwenkmotoren ist beispielsweise das Fahrwerk von Fahrzeugen, wobei die Schwenkmotoren in den Stegbereich von Querstabilisatoren eingebaut sind, um durch wechselseitiges Verdrehen der Stabilisatorhälften gegeneinander auf das Fahrverhalten Einfluß zu nehmen.

Figuren 1 und 2 zeigen jeweils einen Ausschnitt aus einem solchen Schwenkmotor, wobei jeweils ein wellenseitiger Flügel teilweise gezeigt ist, und zwar in einem quer zur Flügellängserstreckung gelegten Schnitt, so daß auch das jeweils scheitelseitig in einer Führungsnut eingesetzte Dichtelement im Querschnitt sichtbar ist.

Im Einzelnen sind die Flügel jeweils mit 1 bezeichnet, die darin im Scheitelbereich eingestochenen und sich über die Länge der Flügel 1 erstreckenden Nuten mit 2 und die über die Flügel 1 gegeneinander getrennten, hier nicht weiter dargestellten Arbeitskammern mit 3 und 4. In den Nuten 2 sind Dichtelemente 5, 6 prinzipiell gleichen Aufbaus angeordnet, die einen über den rechteckigen Umfang umlaufenden, rechteckigen Dichtrahmen 7, 8 und einen inneren Dichteinsatz 9, 10 aufweisen.

Der Dichtrahmen 7, 8 liegt mit seinen beiden Längsschenkeln 11, 12 einerseits am Grund der Nut 2 an und andererseits an der offenen Seite der Nut 2 an der Umfangswand 13 des nicht weiter dargestellten Gehäuses des Schwenkmotors. Die stirnseitigen Schenkel des Dichtrahmens 6 bzw. 7 sind mit 14 und 15 bezeichnet und dichten im Bereich der Stirnseiten der Flügel 1 in nicht näher dargestellter Weise gegen die stirnseitigen Abschlußteile der Arbeitsräume, also beispielsweise Deckel ab.

Die Schenkel 11, 12 und 14, 15 weisen jeweils U-Querschnitt auf, so daß der Rahmen 7 bzw. 8 umlaufend eine gegen den Rahmeninnenraum 16 offene Rinne bildet, in die der scheibenförmige Dichteinsatz 9 bzw. 10 eingreift. Der Dichteinsatz 9, 10 ist damit den Rahmeninnenraum 16 vollflächig überdeckend mit seinen umfangsseitigen Rändern in der durch den U-Querschnitt der Schenkel 11, 12 bzw. 14, 15 gebildeten Rinne gehalten, und er bildet im Rahmen der Erfindung quasi eine Sperrblende, da auf den Rahmeninnenraum 16 von den einander gegenüberliegenden Arbeitskammern 3, 4 Verbindungen 17, 18 ausmünden, die, wie im Ausführungsbeispiel, in einfachster Weise durch die Flügel 1 im Bereich der Nut 2 durchsetzende Bohrungen gebildet sein können.

Ist die eine oder die andere Arbeitskammer 3 bzw. 4 mit Druckmedium beaufschlagt, so beaufschlagt dies über die Verbindung 17 bzw. 18 auch den vom Rahmen 7 bzw. 8 umschlossenen Rahmeninnenraum 16, der in Längsrichtung der Nut 2 durch den Dichteinsatz 9 bzw. 10 unterteilt ist. Dementsprechend wird dieser Dichteinsatz 9 bzw. 10 nach der Seite, der die Kammer 3 bzw. 4 niederen Drucks benachbart liegt, gedrängt und stützt sich dabei gegen die entsprechende Nutwand über die dazwischenliegende Rinnenwand ab. Entsprechend der allseitigen Wirksamkeit des Druckes ist der Rahmen 7 bzw. 8 zusätzlich auch nach außen bzw. gegen die andere, gegenüberliegende Nutwand angedrückt, so daß die angestrebte Rundumdichtung erreicht wird. Und dies bei einem sehr einfachen Aufbau des Dichtelementes 5, 6, da dieses nur aus dem Dichtrahmen 7 bzw. 8 und dem Dichteinsatz 9, 10 besteht, der zudem so gestaltet sein kann, daß das Dichtelement 5, 6 eine vorgefertigte Einheit bildet, wobei der Dichteinsatz 9 bzw. 10 gegebenenfalls in den Dichtrahmen 7 bzw. 8 eingeknüpft sein kann.

Die Verwendung eines in sich über den Umfang geschlossenen Dichtrahmens 7, 8 bedingt, um die angestrebte Dichtwirkung zu erreichen, daß dieser, bezogen auf die jeweils wirksamen Kräfte, im wesentlichen im Rahmen des Toleranzausgleiches aufdehnbar ist, so wie auch bezüglich der Rinnenwände aufspreizbar.

Die Art der Führung des Dichtrahmens 7, 8 in der Nut 2 macht es erfindungsgemäß allerdings auch möglich, für den Dichtrahmen Materialien höher Elastizität als beispielsweise PTFE zu verwenden, so insbesondere auch elastomere Materialien, wobei solche gummielastischen Materialien im Hinblick auf möglichst günstige Reibwerte zumindest an ihren diesbezüglich betroffenen Oberflächen auch Gleitbeschichtungen tragen können.

Insbesondere in Verbindung mit Dichtrahmen 7, 8 aus elastomeren Materialien, aber keineswegs auf diese Anwendungsfälle beschränkt, erweist es sich im Rahmen der Erfindung desweiteren als zweckmäßig, über den Dichteinsatz 9, 10 eine gewisse Vorspannung auf den Dichtrahmen aufzubringen, so daß das jeweilige Dichtelement 5, 6 zwischen den beiden Arbeitskammern 3 und 4 ungeachtet noch fehlender Druckbeaufschlagung bereits eine Dichtgrenze bildet.

Soll eine entsprechende Vorspannung im wesentlichen nur in Richtung auf die umgrenzenden Wände von Gehäuse und Welle wirken, so erweist es sich als zweckmäßig, die durch den U-förmigen Querschnitt der Schenkel 11, 12 bzw. 14, 15 des Dichtrahmens 7 gebildete Rinne 19 mit parallelen Rinnenwänden auszubilden, also angepaßten einen Dichteinsatz 9, wie er in den Figuren 1, 7 und 9 veranschaulicht bzw. angedeutet ist, wobei dieser Dichteinsatz 9 einen scheibenförmigen, in die Rinne 19 eingreifenden Bund 25 aufweist.

In der Ausgestaltung gemäß Figuren 2 und 5 weist die Rinne 20 einen hinterschnittenen Querschnitt auf, und es ist der Dichteinsatz 10 gemäß Figuren 2, 8 und 10 am Außenumfang mit einer Ringwulst 26 versehen, wobei durch die Bemessung des Ringwulstes und der Wandstärke der Schenkel der Grad der Vorspannung bestimmt werden kann.

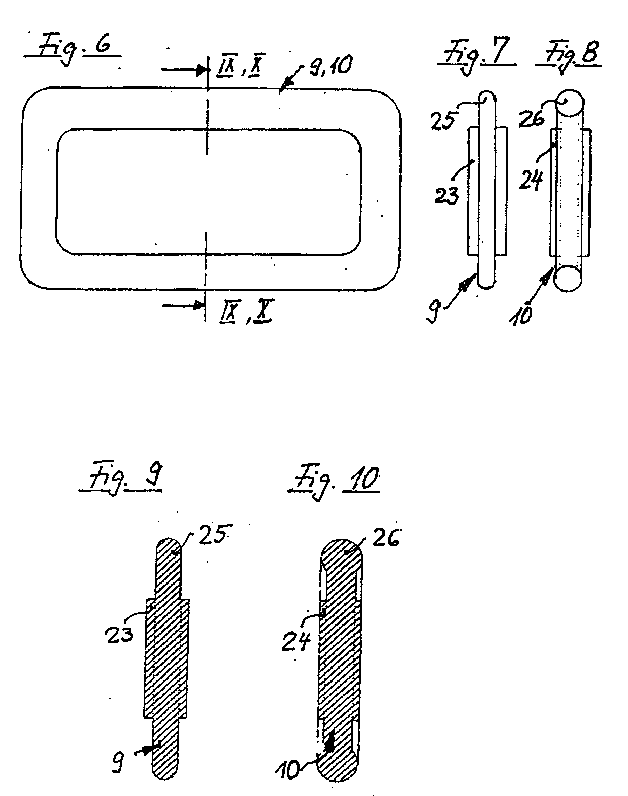

Die Rahmenschenkel 11, 12, 14, 15 sind an ihren Außenkanten, wie in Figur 3 angedeutet, bevorzugt scharfkantig. Bezüglich der Seitenwände 21 bzw. 22 (Figur 4, Figur 5), die gegen die Wände der Nut 2 zur Anlage kommen, kann es sich als zweckmäßig erweisen, diese mit einer gewissen Balligkeit auszuführen und gegebenenfalls auch in Richtung auf den Rahmeninnenraum etwas zurückzunehmen, so daß erst unter dem Einfluß einer gezielt aufgebrachten Vorspannung und/oder des Druckaufbaus in der Rinne 19, 20 eine größere flächige Anlage erreicht wird.

Insbesondere Figuren 6 bis 10 veranschaulichen auch, daß es im Rahmen der Erfindung zweckmäßig sein kann, den Dichteinsatz 9 bzw. 10 in seinem mittleren, vom Rahmen 7 bzw. 8 umschlossenen Bereich verdickt auszuführen. Entsprechende Verdickungen sind mit 23 und 24 angedeutet, und es wird über ein diese bei seitlicher Druckbeaufschlagung der Verschiebeweg in Richtung auf die jeweils benachbarte Nutwand beschränkt, so daß bei höheren Drücken unzulässig hohe Belastungen der Rinnenwände vermieden werden, die je nach Beschaffenheit des Materials des Dichtrahmens zu einem Fließen des Materials oder zu unzulässig hohen Flächenpressungen, so beispielsweise bei elastomeren Materialien führen könnten.

Der Vergleich der Figuren 3 und 6 zeigt, das der Dichtrahmen 6 bzw. 7 bezüglich seines Außenumfangs Rechteckkontur hat, daß aber für den Dichteinsatz 9 bzw. 10 verrundete Eckbereiche zweckmäßig sind. Ein entsprechender Verlauf der Rinnen 19, 20, die durch die U-förmige Querschnittskontur der Schenkel 11, 12 bzw. 14, 15 gebildet sind, macht es möglich, auch bei Dichtrahmen aus elastomeren Materialien die Eckbereiche des Dichtrahmens 7, 8 durch Materialanhäufung zu versteifen, so daß auch in den Eckbereichen eine gute Abdichtwirkung sichergestellt ist.

## Patentansprüche

1. Schwenkmotor mit einem einen ringförmigen, stirnseitig geschlossenen Arbeitsraum umgrenzenden Gehäuse, zentraler Motorwelle und einander radial übergreifenden, in Umfangsrichtung gegeneinander versetzten, gehäuseseitigen und wellenseitigen Flügeln (1), die in Umfangsrichtung aufeinander folgende, alternierend mit Druckmedium beaufschlagbare Arbeitskammern (3, 4) gegeneinander abgrenzen und im Scheitelbereich mit axial durchlaufenden Nuten (2) versehen sind, die quer zur Nuterstreckung sperrende Dichtelemente (5; 6) aufnehmen, welche einen nach außen aufdehnbaren Dichtrahmen (7; 8) und einen in den vom Rahmen (7; 8) umschlossenen Innenraum (16) einsetzbaren, mit den Rahmenschenkeln (11, 12, 14, 15) zusammenwirkenden inneren Dichteinsatz (9, 10) umfassen, wobei der Rahmen durch Verbindung der Nut (2) zur jeweils fluidversorgten, benachbarten Arbeitskammer (3 bzw. 4) mit Druckmedium beaufschlagbar ist,
**dadurch gekennzeichnet,**
**daß** der in der Nut (2) liegende Dichtrahmen (7, 8) mit sich nach innen öffnendem U-förmigen Querschnitt seiner Schenkel (11, 12, 14, 15) den in der Nut (2) liegenden Rahmeninnenraum (16) dichtend umschließt, in dessen Bereich die Verbindungen (17, 18) der Nut (2) zu den jeweils benachbarten Arbeitsräumen (3, 4) auf die Nut (2) ausmünden und über den inneren Dichteinsatz (9, 10), der in die durch den U-förmigen Querschnitt der Schenkel (11, 12; 14, 15) gebildete umlaufende Rinne (19, 20) eingreift, als Sperrblende gegeneinander abgegrenzt sind.

2. Schwenkmotor nach Anspruch 1,
**dadurch gekennzeichnet,**
**daß** der inneren Dichteinsatz (9, 10) scheibenförmige Kontur aufweist.

3. Schwenkmotor nach Anspruch 1 oder 2,
**dadurch gekennzeichnet,**
**daß** die Dicke des inneren Dichteinsatzes in dessen in die Rinne (19, 20) eingreifendem Bereich größer als die lichte Weite der Rinne (19, 20) ist.

4. Schwenkmotor nach Anspruch 2 oder 3,
**dadurch gekennzeichnet,**
**daß** der Außenumfang des inneren Dichteinsatzes (10) als umlaufender, verstärkter Ringwulst (26) ausgebildet ist.

5. Schwenkmotor nach Anspruch 4,
**dadurch gekennzeichnet,**
**daß** der Durchmesser des Ringwulstes (26) größer als der aufnehmende freie Querschnitt der Rinne (20) ist.

6. Schwenkmotor nach einem oder mehreren der vorhergehenden Ansprüche,
**dadurch gekennzeichnet,**
**daß** der inneren Dichteinsatz (9, 10) innerhalb des vom Dichtrahmen (7, 8) umschlossenen zentralen Bereiches verdickt ausgeführt ist.

7. Schwenkmotor nach Anspruch 6,
**dadurch gekennzeichnet,**
**daß** der inneren Dichteinsatz (9, 10) als gegen den aufgesetzten Rahmen (7, 8) in der Dicke gestufte Scheibe ausgebildet ist.

8. Schwenkmotor nach Anspruch 6,
**dadurch gekennzeichnet,**
**daß** die den inneren Dichteinsatz (9, 10) bildende Scheibe symmetrisch zu einer mittleren Scheibenebene ausgebildet ist.

9. Schwenkmotor nach Anspruch 8,
**dadurch gekennzeichnet,**
**daß** die jeweilige stufenförmige Verdickung im zentralen Bereich des inneren Dichteinsatzes (9, 10) kleiner ist als die Dicke der entsprechenden Wand der Rinne (19 bzw. 20).

10. Schwenkmotor nach einem oder mehreren der vorhergehenden Ansprüche,
**dadurch gekennzeichnet,**
**daß** der Dichtrahmen (7, 8) aus einem elastomeren Material besteht.

11. Schwenkmotor nach Anspruch 10,
**dadurch gekennzeichnet,**
**daß** der Dichtrahmen (7, 8) zumindest teilweise mit einer Gleitbeschichtung versehen ist.

## Claims

1. Pivot motor comprising a housing surrounding an annular working space closed at the end face, a central motor shaft and vanes (1) on the housing side and on the shaft side which radially overlap one another, are offset from one another in the peripheral direction and delimit from one another working chambers (3, 4) following each other in the peripheral direction, and can be alternately supplied with pressure medium and, in the vertex region, are provided with axially continuous grooves (2) which receive sealing elements (5; 6) which act as a barrier transverse to the extent of the grooves and comprise a sealing frame (7; 8) which can be outwardly expanded and an inner sealing insert (9, 10) which can be inserted into the interior (16) surrounded by the frame (7; 8) and cooperates with the frame limbs (11, 12, 14, 15), wherein the frame can be supplied with pressure medium by connecting the groove (2) to the respective adjacent working chamber (3 or 4) supplied with fluid, **characterised in that** the sealing frame (7, 8) located in the groove (2) surrounds the frame interior (16) located in the groove (2) with the inwardly-opening U-shaped cross-section of its limbs (11, 12, 14, 15) in a sealing manner, in the region of which frame interior (16) the connections (17, 18) of the groove (2) to the respective adjacent working spaces (3, 4) open out onto the groove (2) and are delimited from one another as a blocking diaphragm via the inner sealing insert (9, 10) engaging in the peripheral channel (19, 20) formed by the U-shaped cross-section of the limbs (11, 12; 14, 15).

2. Pivot motor according to claim 1, **characterised in that** the inner sealing insert (9, 10) has a disc-shaped contour.

3. Pivot motor according to claim 1 or 2, **characterised in that** the thickness of the inner sealing insert in its region engaging in the channel (19, 20) is greater than the internal diameter of the channel (19, 20).

4. Pivot motor according to claim 2 or 3, **characterised in that** the outer periphery of the inner sealing insert (10) is designed as a peripheral, reinforced annular bead (26).

5. Pivot motor according to claim 4, **characterised in that** the diameter of the annular bead (26) is greater than the receiving free cross-section of the channel (20).

6. Pivot motor according to one or more of the preceding claims, **characterised in that** the inner sealing insert (9, 10) inside the central region surrounded by the sealing frame (7, 8) is thickened in design.

7. Pivot motor according to claim 6, **characterised in that** the inner sealing insert (9, 10) is designed as a disc which is stepped in thickness relative to the positioned frame (7, 8).

8. Pivot motor according to claim 6, **characterised in that** the disc forming the inner sealing insert (9, 10) is symmetrical in design to a central disc plane.

9. Pivot motor according to claim 8, **characterised in that** the respective step-shaped thickening in the central region of the inner sealing insert (9, 10) is smaller than the thickness of the corresponding wall of the channel (19 or 20).

10. Pivot motor according to one or more of the preceding claims, **characterised in that** the sealing frame (7, 8) consists of an elastomeric material.

11. Pivot motor according to claim 10, **characterised in that** the sealing frame (7, 8) is at least partially provided with an anti-friction coating.

## Revendications

1. Moteur pivotant comportant un carter qui entoure un espace de travail de forme annulaire, fermé frontalement, un arbre central du moteur et des ailes (1) qui se chevauchent radialement, sont décalées mutuellement dans la direction circonférentielle, sont situées côté carter et côté arbre et délimitent entre elles des chambres de travail (3, 4), qui se succèdent sur la direction circonférentielle et peuvent être chargées alternativement par un fluide sous pression, et comporte, dans leur partie sommitale, des rainures traversantes axiales (2), qui logent des éléments d'étanchéité (5; 6) qui réalisent un blocage transversalement par rapport à l'étendue des rainures et comprennent un cadre d'étanchéité (7; 8), dilatable vers l'extérieur, et un insert intérieur d'étanchéité (9, 10), qui peut être inséré dans l'espace intérieur (16) entouré par le cadre (7; 8) et coopère avec les branches (11, 12, 14, 15) du cadre, le cadre pouvant être chargé avec un fluide sous pression par communication de la rainure (2) avec la chambre de travail voisine (3 ou 4), alimentée respectivement par le fluide,
**caractérisé en ce**
**que** le cadre d'étanchéité (7, 8) situé dans la rainure (2) entoure de façon étanche, par la section transversale en forme de U, qui s'ouvre vers l'intérieur, de ses branches (11, 12, 14, 15), l'espace intérieur (16) du cadre, situé dans la rainure (2) et dans la zone duquel les liaisons (17, 18) de la rainure (2) avec les chambres de travail respectivement voisines (3, 4) débouchent dans la rainure (2) et sont limités mutuellement par l'intermédiaire de l'insert d'étanchéité intérieur (9, 10), qui s'engage dans la rainure périphérique (19, 20), formée par la section transversale en forme de U des branches (11, 12; 14, 15), en tant qu'écran de blocage.

2. Moteur pivotant selon la revendication 1, **caractérisé en ce que** l'insert d'étanchéité intérieur (9, 10) possède un contour en forme de disque.

3. Moteur pivotant selon la revendication 1 ou 2, **caractérisé en ce que** l'épaisseur de l'insert d'étanchéité intérieur dans sa partie qui s'engage dans la rainure (19, 20), est supérieure à la largeur de la rainure (19, 20).

4. Moteur pivotant selon la revendication 2 ou 3, **caractérisé en ce que** la périphérie extérieure de l'insert d'étanchéité intérieur (10) est agencée sous la forme d'un bourrelet annulaire périphérique renforcé (26).

5. Moteur pivotant selon la revendication 4, **caractérisé en ce que** le diamètre du bourrelet annulaire (26) est supérieur à la section transversale libre de logement de la rainure (20).

6. Moteur pivotant selon une ou plusieurs des revendications précédentes, **caractérisé en ce que** l'insert d'étanchéité intérieur (9, 10) est réalisé en étant épaissi à l'intérieur de la partie centrale entourée par le cadre d'étanchéité (7, 8).

7. Moteur pivotant selon la revendication 6, **caractérisé en ce que** l'insert d'étanchéité intérieur (9, 10) est agencé sous la forme d'un disque, dont l'épaisseur est étagée par rapport au cadre (7, 8) monté sur l'insert.

8. Moteur pivotant selon la revendication 6, **caractérisé en ce que** le disque formant l'insert d'étanchéité intérieur (9, 10) est agencé symétriquement par rapport à un plan médian du disque.

9. Moteur pivotant selon la revendication 8, **caractérisé en ce que** l'épaississement respectif de forme étagée dans la partie centrale de l'insert d'étanchéité intérieur (9, 10) est inférieur à l'épaisseur de la paroi correspondante de la rainure (19 ou 20).

10. Moteur pivotant selon une ou plusieurs des revendications précédentes, **caractérisé en ce que** le cadre d'étanchéité (7, 8) est réalisé en un matériau élastomère.

11. Moteur pivotant selon la revendication 10, **caractérisé en ce que** le cadre d'étanchéité (7, 8) est pourvu au moins partiellement d'un revêtement favorisant le glissement.
